# EUROPEAN PATENT APPLICATION

(11) **EP 4 765 569 A2**
(43) Date of publication of application: **24.06.2026**
(21) Application number: 26161698.1
(22) Date of filing: 25.07.2012
(51) Int. Cl.: H02J 7/34

(54) **CHARGING ELECTRONIC DEVICES**

(30) Priority: 09.05.2012 US 201213467617
(62) Divisional of application: 12177852.6
(71) Applicant: Malikie Innovations Limited, Dun Laoghaire, Dublin A96 VR66 (IE)
(72) Inventor: FILES, Jace William, 75039 Irving (US); BODA, Mallikarjun, 75039 Irving (US)
(74) Representative: Murgitroyd & Company

(57) **Abstract**

An electronic device may include a first charging port. A peripheral device connected to the first charging port can be sensed. The first charging port can be electrically connected to a battery charger of the electronic device by a first connection and configured to provide a charge to the battery charger through the first connection. The first charging port can be further electrically connected to a battery of the electronic device by a second connection and configured to receive a charge from the battery by the second connection. A charge (i.e., power) can be provided to the peripheral device from the battery through the second connection. A charge on the first connection can be directed away from the battery charger.

## Description

### CLAIM OF PRIORITY

This application claims priority to U.S. Patent Application Serial No. 13/467,617 filed on May 9, 2012, the entire contents of which are hereby incorporated by reference.

### FIELD

The present disclosure pertains to charging electronic devices, and, more particularly, to charging electronic devices that include multiple charging ports, including a charging port for an universal serial bus on-the-go device.

### BACKGROUND

An electronic device can include a Universal Serial Bus (USB) port to connect to other devices. USB On-The-Go (OTG) and USB host mode (collectively referred to herein as USB HOST MODE), allow USB devices, such as personal digital assistants (PDAs), digital audio players, tablet PCs, smartphones, and/or mobile phones, to act as a "host" allowing other USB devices, such as USB flash drives, mouse, keyboard, etc., to be attached as a "slave." (As used herein, terms such as "master" and "slave" connote a host and peripheral technological relationship and are not intended to carry any connotation beyond the technological one.) USB HOST MODE introduces the concept that a device can perform both the master and slave roles. With USB HOST MODE, a device can be either a host (acting as the link master) or a peripheral (acting as the link slave). In the master/slave architecture, a USB host acts as the protocol master, and the other USB device acts as the slave. The host can schedule the configuration and data transfers over the USB link. In general, the slave devices cannot or do not initiate data transfers, but respond to requests given by a host.

### DESCRIPTION OF THE DRAWINGS

FIG. 1 is a schematic illustration of an example electronic device having multiple charging ports.
FIG. 2 is a functional block diagram of a circuit for charging an electronic device and a USB HOST MODE peripheral device connected to the electronic device.
FIG. 3 is a schematic illustration of an example circuit for charging an electronic device and a USB HOST MODE peripheral device connected to the electronic device.
FIG. 4 is a process flow diagram for charging an electronic device and/or a USB HOST MODE peripheral device connected to the electronic device.

### DETAILED DESCRIPTION

Electrical devices may include two or more charging ports, including, among others, a port to connect the device with a cradle, a charging station, or other charging platform or device (collectively referred to herein as a cradle or cradle device), and a USB port. For electrical devices with two charging ports, charging of the electrical device may occur through the cradle or through the USB port. For USB HOST MODE, however, power is supplied through the USB port. Typical devices that may include such charging ports may include a tablet computer, a smartphone, a laptop computer, a navigation device, and others. Many of these devices may be readily portable from place to place, and some may be handheld, that is, sized and shaped to be held or carried in a human hand, and typically may be used while so held.

In a USB On-the-Go (USB HOST MODE) mode, two USB HOST MODE peripheral devices, such as two handheld devices, can be coupled or connected together. (In general, when components are described herein as connected to one another, they may be physically connected, electrically connected, mechanically connected, optically connected or any combination thereof, according to context.) In this fashion, data can be exchanged between two portable electronic devices, with one device acting as the host and the other device acting as the peripheral. While in the USB HOST MODE, the portable electronic device must ordinarily be capable of supplying power, such as 5V and a limited supply of current (typically up to 300mA - 500mA), to the USB HOST MODE peripheral device. The USB HOST MODE peripheral device may be, for example, a flash memory drive, a second handheld communications device, or other device.

In general, the present disclosure pertains, at least in part, to implementations in which charge or power from a power source is transmitted or directed to where it is needed. The term "direct" can imply the existence of a circuit path through which electrical charge can flow. A host electronic device may, for example, receive a charge from one charging port, and direct the charge to a battery or to the other charging port. In a particular illustration, the present disclosure is directed, at least in part, to allowing for a USB HOST MODE peripheral device to be powered by the power pack, which for simplicity may be illustrated as a rechargeable battery (although a power pack may also include more batteries and one or more other energy storage elements), of the electronic device through the USB port while ensuring that any charge detected on a connector of the USB port does not trigger the battery to charge itself. Furthermore, the present disclosure is directed to allowing for a USB HOST MODE peripheral device connected to the USB port to receive power while the electronic device is connected to a cradle, and is itself receiving power. The present disclosure contemplates hardware and software implementations. Example hardware implementations include a bypass circuit in electrical communications with a battery charger that can provide the appropriate signals or indicators to the battery charger to trigger the charging of the battery or to indicate to the battery charger to refrain from charging the battery, depending on the voltage or other input on particular terminals of the bypass circuit. Signals or indicators can include one or more of a voltage, a current, a binary signal, an electromagnetic field, a software encoded instruction, a lack of any of the previously mentioned signals, or other signal.

For example, an example bypass circuit may include a first connection to the USB port and a second connection to the USB port. The first connection may be a terminal of the USB port that when connected, establishes a connection with the battery charger so that when a charge is received on the first connection, the battery charger initiates charging of the battery. The second connection to the USB port may be a terminal of the USB port that when connected, establishes an electrical connection to the battery of the electronic device so that when connected to a peripheral device, the battery may provide (or supply) charge (or power) to the peripheral device. The first and second connections may be electrically connected to inputs of a circuit element. If a charge is detected on the second connection, the circuit element can provide an indicator to/through the remainder of the bypass circuit (and to other elements of the electronic device, such as the battery charger) that a peripheral device is connected to the USB port and needs power and that charging from the USB should not occur. It is understood that a latent charge may reside at a terminal of the charging ports. Latent charges would not trigger charging events, particularly when no circuit path exists between the charging port and the external device. In certain implementations, the circuit element is a transistor, such as an n-type metal oxide semiconductor field effect transistor (NFET), which behaves as an electronic switch. For example, the second connection can be an input to the gate of the NFET (i.e., the gate voltage of the NFET could be a function of the voltage on the second connection), and the first connection can be an input to the drain of the NFET (i.e., the drain voltage of the NFET could be a function of the voltage on the first connection). The source of the NFET can be held at ground. If the gate voltage is equal to or greater than a threshold voltage for the NFET, the NFET will allow current to flow. Holding the source of the NFET to ground essentially creates a short circuit (or low resistance circuit pathway) across the transistor. Thus, voltage on the first connection will go to ground (a resistor can be used downstream of the first connection). Thus, the output of the NFET will be a zero voltage if the gate voltage is high (i.e., there is sufficient charge on the second connection). This is so whether or not there is a voltage on the first connection.

If there is insufficient voltage on the second connection (i.e., gate voltage of the NFET is below a threshold), then the NFET acts as an open circuit. If there is a voltage on the first connection (i.e., there is a charger connected to the USB port), then the output of the bypass circuit will cause the battery charger to charge the battery. More particularly, the voltage on the first connection can cause a current to flow through the bypass circuit, providing a signal or other indication to the battery charger to charge the battery from the USB port. The NFET "open circuit" can prevent current from flowing back to the USB port through the second connection.

The bypass circuit can also include a third connection connected to the cradle. The cradle can, in general, be connected to a battery charging device. The third connection can be connected to a diode (or other functionally equivalent circuit element(s)) preventing current from or to the USB port from entering the cradle. Similarly, a diode (or other functionally equivalent circuit element(s)) can reside proximate the output of the NFET to prevent current from the third connection from entering the USB port.

In certain implementations, the battery charger includes a circuit element that can interpret signals or other indicators from the bypass circuit to either charge or not charge the battery. The circuit element may, in some implementations, be a negative chip enable pinout, which interprets a low signal as a trigger to charge the battery and a high signal not to charge the battery. The bypass circuit can include a circuit element that acts as an inverter, receiving input from the first and second ports. If there is a voltage on the second connection and no voltage on the third connection, the output of the NFET will be a low signal (e.g., in implementations where the NFET is connected to ground), and the output of the inverter circuit element will be a high signal. An input of high into the negative chip enable circuit element will cause the battery charger to refrain from charging the battery. This is so whether or not there is a voltage on the first connection (e.g., a resistor downstream of the first connection, subsequently connected to the drain of the NFET, which has a source connected to ground, will cause the voltage on the first connection to drop to ground). A low signal at the inverter will create a high signal at the negative chip enable circuit element to cause the battery charger to refrain from charging the battery. If there is a voltage on the first connection, and no voltage on the second connection, however, the input to the inverter will be a high signal, and the output of the inverter will be a low signal. A low signal into the negative chip enable circuit element will cause the battery charger to charge the battery. Similarly, a voltage on the third connection will be a high signal at the inverter, and a low signal on the negative chip enable circuit element, also causing the battery charger to charge the battery. In this implementation, a voltage on the third connection (i.e., a cradle voltage) will cause the battery to charge, whether or not a peripheral device or battery charger is connected to the USB port. The inverter circuit element can be a transistor, such as a bipolar junction transistor (BJT), or more specifically, an NPN BJT.

Other implementations are also contemplated. For example, the functions described above can be achieved using software to interpret voltage signals and activate (or refrain from activating) the battery charger based on the voltage signals. An analog-to-digital converter and a data acquisition device can be used to receive input signals from the first and second ports, interpret them, and facilitate the appropriate response.

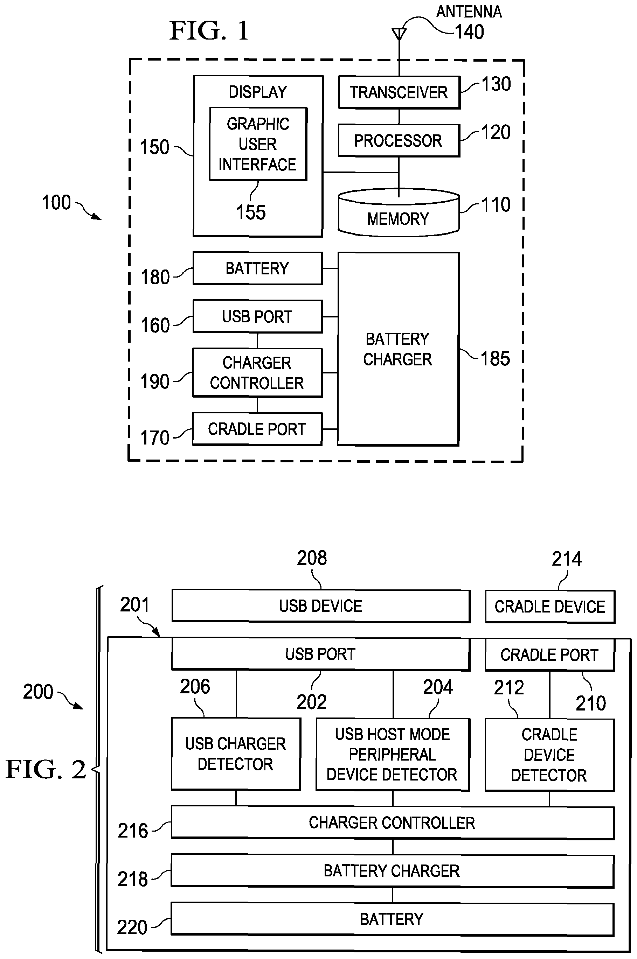

FIG. 1 is a schematic illustration of an example electronic device 100 having multiple charging ports. FIG. 1 is an example electronic device 100, which can be a wireless communications device capable of communicating (e.g., communicating voice or data) with another entity, such as a cellular network. The electronic device 100 can be a tablet device, a smartphone, or other electronic device. The electronic device 100 may include a processor 120, a memory 110, a wireless transceiver 130, an antenna 140, and a display 150 capable of displaying a graphical user interface (GUI) 155. Electronic device 100 also includes at least two charging ports. In FIG. 1, two charging ports are illustrated as a cradle port 170 and a USB port 160. The electronic device 100 may also include a rechargeable battery 180 that can provide power to the electronic device 100, as well as to external devices, such as those connected to the USB port 160. The electronic device 100 may also include a battery charger 185 coupled to the rechargeable battery 180. Battery charger 185 can be connected to the cradle port 170 and the USB port 160, and can charge rechargeable battery 180 using power received from a charging device connected to the cradle port 170 and/or the USB port 160. A charger controller 190 can also be coupled to the cradle port 170 and the USB port 160. Charger controller 190 can receive input signals from the cradle port 170 and/or USB port 160 to control whether the battery charger 185 should charge the rechargeable battery 180. The charger controller 190 may include a bypass circuit or may include hardware and software components to control the battery charger 185. Other implementations may also be used. It should be understood that the electronic device 100 may include additional or different components.

The processor 120 may include a microprocessor, a central processing unit, a graphic control unit, a network processor, or other processors for carrying out instructions stored in the memory 110. The functions of the processor 120 may include computation, queue management, control processing, graphic acceleration, video decoding, and execution of a sequence of stored instructions from the program kept in the memory 110. In some implementations, the processor 120 may also be responsible for signal processing including sampling, quantizing, encoding/decoding, and/or modulation/demodulation of the signal.

The memory 110 may include any memory or database module and may take the form of volatile or non-volatile memory including, without limitation, magnetic media, optical media, random access memory (RAM), read-only memory (ROM), removable media, or any other suitable local or remote memory component. The memory 110 may store various objects or data, including classes, frameworks, applications, backup data, business objects, jobs, web pages, web page templates, database tables, repositories storing business and/or dynamic information, and any other appropriate information including any parameters, variables, algorithms, instructions, rules, constraints, or references thereto associated with the purposes of the wireless communication device and its personal/enterprise applications.

The wireless transceiver 130 can include both the transmitter circuitry and the receiver circuitry. The wireless transceiver 130 may be responsible for up-converting a baseband signal to a passband signal or vice versa. The components of wireless transceiver 130 may include a digital to analog converter/analog to digital converter, amplifier, frequency filter and oscillator. An antenna 140 generally comprises a transducer which can transmit and/or receive electromagnetic waves. The antenna 140 can convert electromagnetic radiation into electric current, or vice versa. The antenna 140 is generally responsible for the transmission and reception of radio waves, and can serve as the interface between the wireless transceiver 130 and the wireless channel. In some implementations, the electronic device 100 may be equipped with multiple antennas to take advantage of the multiple-input-multiple-output (MIMO) technology. The multiple antenna MIMO technology may enable the electronic device 100 to set up multiple parallel data streams on the wireless channel, thereby increasing the throughput or reliability of the wireless channel. Though shown external to the electronic device 100, the antenna 140 may be housed within the electronic device 100.

The display 150 can be an output unit for presentation of information in visual or tactile form in response to electronic input signals. In some implementations, the display 150 may include a touchscreen, which is an electronic visual display that may detect the presence and location of a touch within the display area. Touchscreen may generally refer to a display that detects a touch with a finger or hand. Touchscreens also may detect other passive objects, such as a stylus. Therefore, a display 150 that includes a touchscreen can also be used as an input unit. In some cases, the electronic device 100 may also include a keypad as an input unit.

The GUI 155 may be presented on the display 150. The GUI 155 may be operable to the interface with resources included in the personal perimeter and/or the enterprise perimeter. For example, the GUI 155 may generate a visual representation of applications (e.g., a web browser application). The GUI 155 may provide interface for interactions between the electronic device 100 and an enterprise service. Generally, through the GUI 155, the user is provided with an efficient and user-friendly presentation of data provided by or communicated within the system. The GUI 155 may be any graphical user interface, including but not limited to, a web browser, touch screen interface, or command line interface (CLI) that processes information and presents the processed results to the user. In general, the GUI 155 may include a plurality of user interface elements, such as interactive fields, pull-down lists, and buttons operable by the user on the electronic device 100.

FIG. 2 is a functional block diagram 200 of a circuit for charging an electronic device 201 and a USB HOST MODE peripheral device 208 connected to the electronic device 201. Electronic device 201 includes a USB port 202 and a cradle port 210. The USB port 202 can be connected to a USB HOST MODE peripheral device 208. USB HOST MODE peripheral device 208 shown here can be a USB charger, or other USB connection. The cradle port 210 can be connected to a cradle device 214, which can be a charger, docking station, or other device that can charge battery 220 and/or otherwise communicate with the electronic device 201. The electronic device 201 also includes a charger controller 216. Charger controller 216 can receive signals or other indicators of whether a USB charger is connected to the USB port 202 or whether a USB HOST MODE peripheral device 208 is connected to the USB port 202. A USB charger detector 206 or a USB HOST MODE peripheral device detector 204 can receive an input from the USB port 202 and send a signal to the charger controller 216. A cradle device detector 212 can similarly receive a signal or indicator from the cradle port 210 and send a signal or indicator to the charger controller 216. Based on the inputs received, the charger controller 216 can send a signal or other indicator to the battery charger 218, which can charge (or refrain from charging) the battery 220, depending on the input to the battery charger 218.

The USB HOST MODE peripheral device detector 204, the USB charger detector 206, and/or the cradle device detector 212 may be software, hardware, or a combination of the two. For example, the USB HOST MODE peripheral device detector 204 may be (or include) a terminal that receives an input voltage from the battery 220 or other circuit element directed to a USB HOST MODE peripheral device 208. A voltage on the terminal may be sufficient to signal the charger controller 216 that a USB HOST MODE peripheral device 208 is connected to the USB port 202 and to send a signal to the battery charger 218 to refrain from charging the battery 220. Similarly, the USB charger detector 206 may be (or include) a terminal that receives a voltage from a USB charger, and when a charge is received on the terminal, the battery charger 218 may charge the battery 220 using a circuit path that includes the USB charger (but USB charging may depend on whether a charge is received on the USB HOST MODE peripheral device detector 204). The cradle device detector 212 may be (or include) a terminal that receives a voltage from a cradle device 214, and upon receiving a charge on the terminal, the battery charger 218 may charge the battery 220 using a circuit path that includes a connection to the cradle device 214.

An analog-to-digital (A/D) converter may also be used to receive signals from the USB port 202 and/or the cradle port 210, and input signals to a processor, such as processor 120 of FIG. 1. The processor can use software to interpret signals, and communicate with the battery charger 218 to either charge or refrain from charging the battery 220. Charger controller 216, USB HOST MODE peripheral device detector 204, USB charger detector 206, and cradle device detector 212 may be software modules executed by the processor to interpret input signals and execute instructions based on those signals. Such instructions may include instructions to the battery charger 218 to charge or refrain from charging the battery 220. Other implementations are also possible.

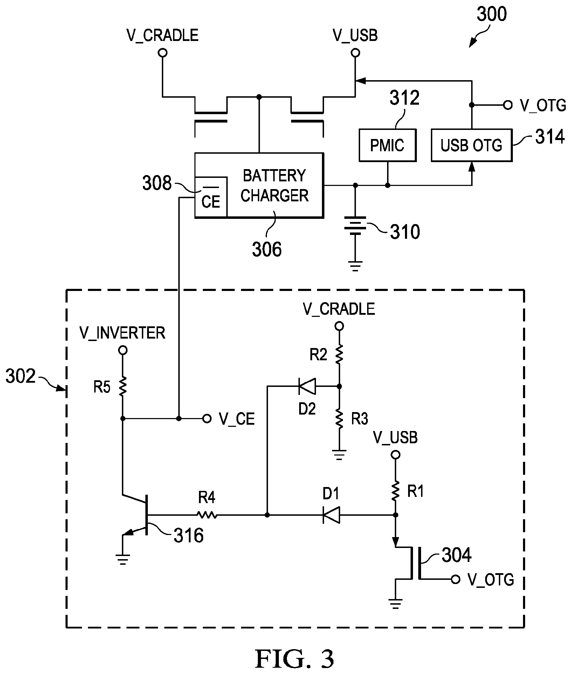

FIG. 3 is a schematic illustration of an example circuit 300 for charging an electronic device and a USB HOST MODE peripheral device connected to the electronic device. The circuit 300 is an example circuit layout, and it is to be understood that other circuit elements and circuit layouts may also be used.

The circuit 300 of FIG. 3 includes a bypass circuit 302 (shown in the dotted box). The bypass circuit 302 includes terminals V_USB, V_OTG, and V_Cradle. The ports are connected to a battery charger 306 and a bypass circuit 302. The battery charger 306 is electrically coupled to a battery 310. The battery charger 306 of FIG. 3 includes a negative chip enable input 308, which is connected to the bypass circuit 302. A low signal on the negative chip enable input 308 signals the battery charger 306 to charge the battery 310 (and vice versa - a high signal at the negative chip enable input 308 signals the battery charger 306 to refrain from charging the battery 310). The battery 310 provides power to a power management integrated circuit (PMIC) 312, which can provide power to the USB port when a USB HOST MODE peripheral device 314 is attached.

V_Cradle is electrically coupled to the cradle port. Similarly, V_USB is electrically coupled to the USB port, for example, on a first connection to the USB port. V_OTG is also electrically coupled to the USB port, for example, on a second connection to the USB port. V_OTG is electrically coupled to a circuit element. In the example circuit shown in FIG. 3, V_OTG terminal is connected to the gate of NFET 304. The source of NFET 304 is coupled to ground. V_USB is coupled to the source of NFET 304 by way of a resistor R1. In certain implementations, R1 may be a high resistance resistor. A diode D1 is connected to the source of NFET 304 and at a downstream terminal of R1.

A V_Cradle terminal is electrically coupled to D2 through resistor R2. V_Cradle is also connected to resistor R3, which is connected to ground. An inverter 316 is coupled downstream of D1 and D2, and, in this case, a resistor R4 resides between the diodes and the inverter 316. In FIG. 3, the inverter 316 is an NPN BJT, and the diode D1 is electrically coupled to the base of the NPN BJT inverter 316. The emitter of the NPN BJT inverter 316 is held at ground. The collector of the NPN BJT inverter 316 can be coupled to a voltage source V_Inverter across a resistor R5. The NPN BJT acts as an inverter so that a high signal at its base makes V_CE a low voltage. The V_Inverter voltage drops across R5 when the NPN BJT has a base voltage equal to or greater than a threshold value associated with the transistor. This threshold voltage can be based on the properties of the BJT, and the base voltage can be a function of a voltage at V_Cradle, V_USB, and/or V_OTG. A low signal at the NPN BJT base sets a high V_CE value because there is no voltage drop across R5.

The bypass circuit facilitates the following state table:

| **V_Cradle** | **V_USB** | **V_OTG** | **Charge Battery?** |
|---|---|---|---|
| High | - | - | Yes |
| Low | High | Low | Yes |
| Low | Low | High | No |

When a USB HOST MODE peripheral device 314 is connected to the USB port, the voltage at V_OTG is high (for example, because the battery is sending power to it). When the V_OTG voltage is high, the NFET 304 acts as a short circuit. The input to the diode D1 is a low signal, which carries on to the input of the inverter 316. Assuming that there is no voltage at V_Cradle, the output of the inverter 316 is a high signal (as described above) as is the input to the negative chip enable input 308 of the battery charger 306, thus signaling the battery charger 306 to refrain from charging the battery 310. Thus, when a USB_OTG peripheral device is connected to the USB port, the bypass circuit 302 signals the battery charger 306 to refrain from charging the battery 310 (assuming V_Cradle = 0).

When a USB HOST MODE peripheral device 314 is connected, the inverter 316 will output a high signal whether or not there is a voltage at V_USB because the NFET 304 acts as a short circuit to ground. A voltage at V_USB will drop across R1 to ground in that scenario. When there is no USB HOST MODE peripheral device 314 connected, however, the NFET 304 behaves like an open circuit, and a voltage at V_USB will cause charge to flow through resistor R1 and diode D1. In that case, the input to the inverter 316 will be high, and the output will be low (because the voltage at V_Inverter will drop to ground across R5). A low signal at V_CE, which is a low signal at the negative chip enable input 308 of the battery charger 306 signals the battery charger 306 to charge the battery 310.

When there is a voltage at V_Cradle, the bypass circuit 302 will allow charging of the battery 310 whether or not there is a USB HOST MODE peripheral device 314 connected to the USB port. In the bypass circuit 302, a voltage at the V_Cradle terminal provides a high input to the inverter 316, which would output a low signal to V_CE and to the negative chip enable input 308. The low signal at the negative chip enable input 308 signals the battery charger 306 to charge the battery 310. An input at the USB port would not change this behavior because the V_Cradle voltage will be high at the inverter input regardless of what the other inputs are. The diodes D1 and D2 help facilitate this behavior. For example, diode D1 restricts voltage from V_Cradle from the drain of the NFET 304. Similarly, diode D2 restricts voltage from V_USB from V_Cradle. In sum, if V_Cradle is high, then the battery charger 306 will charge the battery 310. If V_Cradle is low, but V_OTG is high, then the battery charger 306 will not charge the battery 310, whether or not V_USB is high. If V_OTG is low, but V_USB is high, then the battery charger 306 will charge the battery 310.

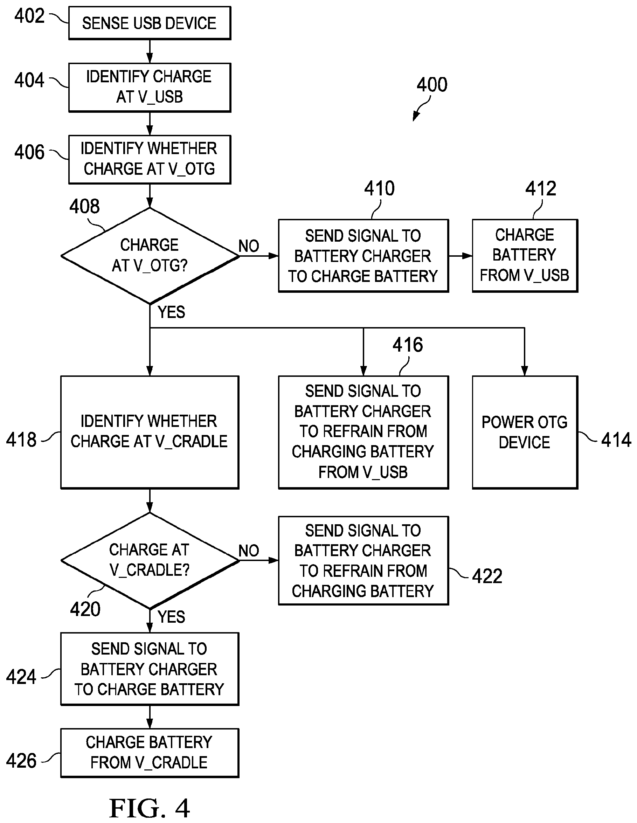

FIG. 4 is a process flow diagram 400 for charging an electronic device and/or a USB HOST MODE peripheral device connected to the electronic device. The electronic device can include a first charging port. The first charging port may be, for example, a USB port or other port that can receive a peripheral device either directly or through a cable or by other ways. The electronic device can sense whether a USB device (such as a USB charger or USB HOST MODE peripheral device) is connected to the first charging port of the electronic device (402). In certain instances, the electronic device can sense the USB device because, for example, the attachment of a USB device to the USB port can close a circuit between the electronic device and the USB device. The closed circuit can cause voltage across the closed circuit to allow the movement of charge between the electronic device and the USB device. This movement of charge may be sufficient to establish a signal to the electronic device that the USB device is connected to the electronic device.

The first charging port may include several pins or terminals (generally, terminals). The terminals can individually connect to terminals on the USB device to complete one or more circuits. In general, when a terminal of the first charging port completes a circuit with a terminal on the USB device, this interface can be referred to as a "connection." A first connection can complete a circuit between the USB device and a battery charger of the electronic device. A second connection can complete a circuit between the USB device and a battery or a PMIC of the electronic device. For example, if the USB device includes a USB HOST MODE peripheral device, the battery and/or PMIC from the electronic device can power the USB HOST MODE peripheral device. In some instances, one or both connections can be completed. In addition, one or both of the first and second connections can complete a circuit with a bypass circuit (or charger controller circuit). A completion of a circuit can allow voltage to move charge across a connection.

The first connection can include a terminal referred to as V_USB. A charge can be identified at a first connection of the USB port (404). The charge can be identified, for example, because the existence of a circuit path based on a first connection between V_USB and the USB device allows voltage to move charge across the first connection. In general, the term "identify" is meant to include different ways of sensing, determining, detecting, or otherwise identifying, in this case, that a charge exists at a connection. It can also be identified whether there is a charge at a second connection of the USB port (406). The second connection can include a terminal referred to as V_OTG (408). If there is a charge at the first connection of the USB port (406) and no charge at V_OTG, then the bypass circuit allows a signal to be sent to the battery charger to charge the battery (410), and the battery charger can charge the battery (412).

If there is a charge at V_OTG (e.g., the USB device includes a USB HOST MODE peripheral device, and the second connection completes a circuit between a terminal of a USB HOST MODE peripheral device (V_OTG) and a terminal of the first charging port), the electronic device can provide power to the USB HOST MODE peripheral device (414). For example, charge from the battery or PMIC of the electronic device can be directed across the second connection to the USB HOST MODE peripheral device. In addition, a signal can be sent to the battery charger (e.g., from the bypass circuit) to refrain from charging the battery from the connection that includes terminal V_USB (416).

In certain implementations, a determination can be made (e.g., in software) of whether an USB HOST MODE peripheral device is connected. The previous discussion illustrates some techniques by which a processor or battery charger may determine, through voltage or signals, whether a peripheral device is electrically connected to a port. In other instances, the bypass circuit can operate based on the circuit elements and without making a determination. Specifically, a voltage at V_OTG may be an input voltage into the circuit element described in FIG. 3 (NFET 304). The NFET operates based on the presence of a threshold voltage at a gate terminal (V_OTG). A voltage at V_OTG that is sufficiently high can activate the transistor to pass current without the transistor having to make a determination - the transistor simply activates. A USB device connected to the first charging port can close a circuit for one or both of V_USB and V_OTG, which causes a voltage on V_USB and/or V_OTG. If the USB device is a USB charger, then there may be no voltage on V_OTG. If the USB device is a USB HOST MODE peripheral device, there may be a voltage on V_USB and V_OTG. A voltage at both terminals may cause the battery to try to charge itself. Thus, V_USB and V_OTG are connected to a bypass circuit. The bypass circuit can include a circuit element that can detect or sense a voltage at V_USB and at V_OTG. The circuit element may be a transistor, such as an NFET. V_OTG may be connected to the gate of the NFET, and V_USB can be connected to the drain of the NFET via a high resistance resistor. If there is a voltage at V_OTG that is sufficiently high, the NFET can activate, causing current to flow from the drain to the source of the NFET. By keeping the source of the NFET at ground, current will flow through the transistor to ground when the transistor is activated - so when there is a voltage on V_OTG and V_USB, no charge flows out of the NFET into the rest of the bypass circuit (see FIG. 3). This lack of charge flow can establish a signal to the battery charger to refrain from charging the battery. If there is no voltage at V_OTG, the transistor acts as an open circuit. Voltage at V_USB can cause charge to flow out of the NFET and into the rest of the bypass circuit, signaling the battery charger to charge the battery (e.g., from V_USB).

A charge can be sensed at a second charging port which includes a cradle terminal (V_Cradle) (418). The second charging port can be an interface for a cradle charging device or other device. A third connection can be established by the interface between V_Cradle and a terminal on the cradle device. The third connection can establish a circuit path between the cradle device and elements of the electronic device, such as the battery charger and/or bypass circuit. When there is a voltage at the cradle port (420), a signal is sent to the battery charger to charge the battery (424). The battery can then be charged (426), i.e., the battery charger supplies or provides a charging current or voltage to the battery. If there is no voltage at the cradle port (420), a signal can be sent to the battery charger to refrain from charging the battery (422). If no charge is detected at the cradle port, the port can be considered "open" or an "open circuit" where there is no circuit connection between the cradle port and a cradle device. Thus, no charge is directed from the cradle device to the battery charger. In certain implementations, refraining from charging the battery includes directing the charge received at the cradle port away from the battery charger (e.g., so that the battery does not waste power trying to charge itself). The charge may be directed to, for example, other electronic components in the host, or the charge may be directed on or to the USB port (and thereby to a connected peripheral device), or both, or the charge may be directed nowhere (i.e., the absence of voltage results in no charge movement, or current). In certain instances, a determination can be made as to whether there is a voltage at the cradle port (and/or whether this voltage is associated with a cradle). In other implementations, the presence of a voltage at a cradle terminal (V_Cradle) will cause a bypass circuit to signal the battery charger to charge the battery.

Several implementations have been described in detail above, and various modifications are possible. The disclosed subject matter, including the functional operations described in this specification, can be implemented in electronic circuitry, computer hardware, firmware, software, or in combinations of them, such as the structural means disclosed in this specification and structural equivalents thereof, including potentially a program operable to cause one or more data processing apparatus to perform the operations described (such as a program encoded in a computer-readable medium, which can be a memory device, a storage device, a machine-readable storage substrate, or other physical, machine-readable medium, or a combination of one or more of them). For example, NFET 304 of FIG. 3 connected to V_USB can be controlled by software. A "high" signal can restrict current from flowing from V_USB to the battery charger 306, whereas a "low" signal will allow current to flow. Alternatively, software can disable charging by controlling the negative charge enable terminal on the battery charger 306.

While this specification contains many specifics, these should not be construed as limitations on the scope of what may be claimed, but rather as descriptions of features that may be specific to particular implementations. Certain features that are described in this specification in the context of separate implementations can also be implemented in combination in a single implementation. Conversely, various features that are described in the context of a single implementation can also be implemented in multiple implementations separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the implementations described above should not be understood as requiring such separation in all implementations.

The features described above and claimed may give rise to one or more advantages. For example, aspects of the present disclosure allow for an electronic device to power a USB HOST MODE peripheral device without the battery of the electronic device sending charge to itself. Further, aspects of the present disclosure provide for multiple charging ports while maintaining a low-cost, compact design that operates relatively quickly and, in some implementations, automatically (i.e., without determinative steps or instructions). The compact design allows for smaller electronic devices and/or more room for other features or circuits.

Other implementations fall within the scope of the following claims.

The following are particularly preferred aspects according to the present disclosure.

Numbered clause 1. A method for charging an electronic device having a first charging port, the method comprising:
sensing that a peripheral device is connected to the first charging port, the first charging port electrically connected to a battery charger of the electronic device by a first connection and configured to provide a charge to the battery charger through the first connection, the first charging port further electrically connected to a battery of the electronic device by a second connection and configured to receive a charge from the battery by the second connection;
providing a charge to the peripheral device from the battery through the second connection; and
directing a charge on the first connection away from the battery charger.

Numbered clause 2. The method of numbered clause 1, wherein the electronic device comprises a second charging port and the method further comprises:
identifying a charge on the second charging port; and
directing the charge on the second charging port to the battery charger.

Numbered clause 3. The method of numbered clause 2 further comprising charging the battery based on identifying the charge on the second charging port.

Numbered clause 4. The method of numbered clause 2, wherein the charge on the second charging port is received from a battery charging device.

Numbered clause 5. The method of numbered clause 1, wherein the peripheral device is a flash drive.

Numbered clause 6. An apparatus for charging an electronic device, the apparatus comprising:
a first charging port electrically connected to a battery charger of the electronic device by a first connection and configured to provide a charge to the battery charger through the first connection, the first charging port further electrically connected to a battery of the electronic device by a second connection and configured to receive a charge from the battery by the second connection; and
a bypass circuit configured to direct a charge from the battery to the second connection; and direct a charge on the first connection away from the battery charger.

Numbered clause 7. The apparatus of numbered clause 6, wherein the bypass circuit is configured to provide an indication to the battery charger to bypass charging the battery.

Numbered clause 8. The apparatus of numbered clause 7, wherein the bypass circuit comprises a first circuit element electrically connected to the second connection, the indication based on an output of the first circuit element.

Numbered clause 9. The apparatus of numbered clause 8, wherein the circuit element comprises a transistor.

Numbered clause 10. The apparatus of numbered clause 9, wherein the transistor is an n-type metal oxide semiconductor field effect transistor (NFET).

Numbered clause 11. The apparatus of numbered clause 7, wherein the indication is a logical hi signal.

Numbered clause 12. The apparatus of numbered clause 7, wherein the battery charger comprises a third circuit element configured to signal the battery charger to charge the battery based on the indication provided by the bypass circuit.

Numbered clause 13. The apparatus of numbered clause 6, further comprising a second charging port configured to receive a charge, and the bypass circuit further comprises a second circuit element configured to prevent the charge on the second charging port from being directed to the first charging port.

Numbered clause 14. The apparatus of numbered clause 13, wherein the second circuit element is a diode.

Numbered clause 15. The apparatus of numbered clause 13 further comprising a fourth circuit element configured to prevent the charge on the first charging port from being directed to the second charging port.

Numbered clause 16. The apparatus of numbered clause 15, wherein the fourth circuit element is a diode.

Numbered clause 17. The apparatus of numbered clause 6, wherein the first charging port is a universal serial bus (USB) port.

Numbered clause 18. A system for charging an electronic device comprising:
a port;
a battery charger; and
a bypass circuit, the bypass circuit comprising:
   a first connection configured to direct charge to the port,
   a second connection configured to direct charge to the battery charger, and
   a circuit element configured to direct a charge on the second connection away from the battery charger when there is a charge on the first connection.

Numbered clause 19. The system of numbered clause 18, wherein the circuit element is a transistor.

Numbered clause 20. The system of numbered clause 19, wherein the charge on the first connection exceeds a threshold value associated with the transistor.

Numbered clause 21. The system of numbered clause 18, wherein the port is a universal serial bus (USB) port.

Numbered clause 22. The system of numbered clause 18, wherein the port is a first port, and the system further comprises a second port electrically connected to the battery charger, the second port comprising a third connection electrically coupled to the second port; and
wherein the bypass circuit is configured to provide an indication to the battery charger to charge the battery when a charge is on the third connection.

This application is a divisional of 12177852.6. The specification and drawings of the divisional are based the specification and drawings of the parent 12177852.6 which are herein incorporated by reference. The following numbered clauses of the specification are based on the clauses of the original parent application as filed.

A1. A method for charging an electronic device having a first charging port, the method comprising: sensing that a peripheral device is connected to the first charging port, the first charging port electrically connected to a battery charger of the electronic device by a first connection and configured to provide a charge to the battery charger through the first connection, the first charging port further electrically connected to a battery of the electronic device by a second connection and configured to receive a charge from the battery by the second connection; providing a charge to the peripheral device from the battery through the second connection; and directing a charge on the first connection away from the battery charger.

A2. The method of clause A1, wherein the electronic device comprises a second charging port and the method further comprises: identifying a charge on the second charging port; and directing the charge on the second charging port to the battery charger.

A3. The method of clause A2 further comprising charging the battery based on identifying the charge on the second charging port.

A4. The method of clause A2, wherein the charge on the second charging port is received from a battery charging device.

A5. An apparatus for charging an electronic device, the apparatus comprising: a first charging port electrically connected to a battery charger of the electronic device by a first connection and configured to provide a charge to the battery charger through the first connection, the first charging port further electrically connected to a battery of the electronic device by a second connection and configured to receive a charge from the battery by the second connection; and a bypass circuit configured to direct a charge from the battery to the second connection; and direct a charge on the first connection away from the battery charger.

A6. The apparatus of clause A5, wherein the bypass circuit is configured to provide an indication to the battery charger to bypass charging the battery.

A7. The apparatus of clause A6, wherein the bypass circuit comprises a first circuit element electrically connected to the second connection, the indication based on an output of the first circuit element.

A8. The apparatus of clause A7, wherein the circuit element is an n-type metal oxide semiconductor field effect transistor (NFET).

A9. The apparatus of clause A6, wherein the battery charger comprises a third circuit element configured to signal the battery charger to charge the battery based on the indication provided by the bypass circuit.

A10. The apparatus of clause A5, further comprising a second charging port configured to receive a charge, and the bypass circuit further comprises a second circuit element configured to prevent the charge on the second charging port from being directed to the first charging port.

A11. The apparatus of clause A10 further comprising a fourth circuit element configured to prevent the charge on the first charging port from being directed to the second charging port.

A12. The apparatus of clause A5, wherein the first charging port is a universal serial bus (USB) port.

A13. A system for charging an electronic device comprising: a port; a battery charger; and a bypass circuit, the bypass circuit comprising: a first connection configured to direct charge to the port, a second connection configured to direct charge to the battery charger, and a circuit element configured to direct a charge on the second connection away from the battery charger when there is a charge on the first connection.

A14. The system of clause A13, wherein the circuit element is a transistor, and wherein the charge on the first connection exceeds a threshold value associated with the transistor.

A15. The system of clause A13, wherein the port is a first port, and the system further comprises a second port electrically connected to the battery charger, the second port comprising a third connection electrically coupled to the second port; and wherein the bypass circuit is configured to provide an indication to the battery charger to charge the battery when a charge is on the third connection.

## Claims

1. A method for charging an electronic device (201) having a first charging interface (202) and a second charging interface (210), the method comprising:
sensing (402) that an external device (208) is connected to the first charging interface (202),
the first charging interface electrically connected to a battery charger (218) of a battery (220) of the electronic device (201) by a first connection and configured to provide a charge to the battery charger (218) through the first connection,
the first charging interface (202) further electrically connected to a power management circuit (312) of the electronic device (201) by a second connection;
a third connection electrically coupling the second charging interface (210) to the battery charger (218) of the electronic device (201), the second charging interface (210) configured to provide a charge to the battery charger (218) through the third connection when the second charging interface (210) is connected to a power supply;
if a first specific state is detected at the first connection by a bypass circuit (302) of the electronic device (201) and a second specific state is detected at the second connection, wherein the first specific state at the first connection indicates that the external device (208) is a battery charging device, providing (410) an indication to the battery charger (218) to charge the battery (220); and
if the first specific state is detected at the second connection and the second specific state is detected at the third connection, wherein the first specific state at the second connection indicates that the external device is a peripheral device, providing (422) an indication to the battery charger (218) to bypass charging the battery (220).

2. The method of claim 1, further comprising:
identifying (420) the first specific state on the second charging interface (210); and
directing the charge on the second charging interface (210) to the battery charger (218).

3. The method of claim 2, wherein the charge on the second charging interface (210) is received from a battery charging device (214).

4. An electronic device (201) comprising a first charging interface (202), a second charging interface (210), a battery charger (218), a power management circuit (312), a bypass circuit (302), a peripheral device detector (204), a first connection, a second connection, and a third connection;
wherein the first charging interface (202) is electrically connected to the battery charger (218) of a battery (220) of the electronic device (201) by the first connection and configured to provide a charge to the battery charger (218) through the first connection when a battery charging device (208) is connected to the first charging interface (202), the first charging interface is further electrically connected to the power management circuit (312) of the electronic device (201) by the second connection and configured to receive a charge from the power management circuit (312) by the second connection when a peripheral device is detected, by the peripheral device detector, to be connected to the first charging interface (202); and
wherein the second charging interface (210) is electrically coupled to the battery charger (218) of the battery (220) of the electronic device (201) by the third connection and configured to provide a charge to the battery charger (218) through the third connection when the second charging interface (210) is connected to a power supply; and
the bypass circuit (302) configured to:
provide (410, 424) an indication to the battery charger (218) to charge the battery (220) if a first specific state at the first connection is detected and a second specific state at the second connection is detected, and
provide (422) an indication to the battery charger (218) to bypass charging the battery (220) if the first specific state is detected at the second connection and the second specific state is detected at the third connection;
wherein the first connection is for wireless charging, the second connection is for wireless power sharing and the third connection is for USB charging.

5. The electronic device of claim 4, wherein the bypass circuit (302) comprises a first circuit element (304) electrically connected to the second connection, and the indication is based on an output of the first circuit element.

6. The electronic device of claim 5, wherein the first circuit element (304) comprises an n-type metal oxide semiconductor field effect transistor, NFET.

7. The electronic device of claim 5 or 6, wherein the battery charger (306) comprises a second circuit element (308) configured to signal the battery charger (306) to charge or bypass charging of the battery (220) based on the indication provided by the bypass circuit (302).

8. The electronic device of claim 7, wherein the second circuit element (308) comprises a negative chip enable pinout.

9. The electronic device of any of claims 4 to 8, wherein the bypass circuit (302) further comprises a third circuit element (D1) configured to prevent the charge on the second charging interface (210) from being directed to the first charging interface (202).

10. The electronic device of claim 9, wherein the third circuit element comprises a diode.

11. The electronic device of any one of claims 4 to 10, wherein the bypass circuit (302) further comprises a fourth circuit element configured to prevent the charge on the first charging interface (202) from being directed to the second charging interface (210).

12. The electronic device of claim 11, wherein the fourth circuit element comprises a diode.

13. The electronic device of any of claims 4 to 12, wherein the first charging interface is configured to support a USB On-the-Go mode.

14. A computer-readable medium storing instructions which, when executed by a computing device, cause an electronic device to perform the operations of any of claims 1 to 3.

15. A computer program product which, when executed on a computing device, is configured to cause an electronic device to carry out the method of any of claims 1 to 3.
